# DEMANDE DE BREVET EUROPEEN

(11) **EP 3 550 120 A1**
(43) Date de publication de la demande: **09.10.2019**
(21) Numéro de dépôt: 19166893.8
(22) Date de dépôt: 02.04.2019
(51) Int. Cl.: F02B 29/04, F02B 37/00, F02M 26/05, F02M 26/06, F02M 26/25, F02M 26/28, F02M 26/30, F02M 26/32, F02M 35/10

(54) **MODULE D'ADMISSION DOUBLE FLUX DE MOTEUR THERMIQUE**

(30) Priorité: 05.04.2018 FR 1825956
(71) Demandeur: RENAULT s.a.s., 92100 Boulogne-Billancourt (FR)
(72) Inventeur: DUBOIS, Sylvain, 78400 CHATOU (FR); VENEZIANI, Thomas, 75015 PARIS (FR); CHALMETTE, BRUNO, 92150 suresnes (FR); FERREIRA PEREZ, SAUL, 78140 VELIZY VILLACOUBLAY (FR)

(57) **Abrégé**

L'invention concerne un moteur thermique (10) comportant un étage de refroidissement des gaz recirculés haute pression (24) et un étage de pré-refroidissement (20) de l'air frais mélangé et compressé avec un encombrement réduit ; les deux étages sont logés à l'intérieur d'un carter de refroidissement (27) dans lequel circule du liquide de refroidissement du moteur.

## Description

### Domaine technique de l'invention

La présente invention concerne un moteur thermique de véhicule automobile.

La présente invention concerne également un module d'admission d'air et de gaz d'un moteur thermique.

La présente invention concerne plus particulièrement un module d'admission d'air et de gaz brulés avec un système de refroidissement optimisé.

### Etat de la technique

De manière connue, un moteur thermique peut comprendre un système de suralimentation afin d'accroitre les performances dudit moteur. Le système de suralimentation comprend un étage de compression d'air avant son admission dans le moteur pour être mélangé avec du carburant. Cet étage de compression peut être associé avec un étage de turbine pour former ensemble un turbocompresseur ou être un module de compression électrique. L'air compressé est ensuite envoyé dans une chambre à combustion du moteur. Toutefois, la température de l'air est augmentée suite à la compression et la densité de l'air compressée introduit dans la chambre à combustion est alors ce qui réduit également l'efficacité du moteur.

Il est connu de faire passer l'air compressé après l'étage de compression et en amont du moteur dans un étage de refroidissement appelé couramment « precooler » qui est formé par un échangeur air-eau. Dans ledit échangeur, l'air circule en contact avec des ailettes autour de tubes dans lesquels circule de l'eau de refroidissement provenant d'un circuit de refroidissement du moteur. Un tel circuit de refroidissement peut passer par exemple au travers du moteur pour refroidir des parties portées à haute température du moteur comme le carter-cylindres et la culasse, l'eau de refroidissement se chargeant alors de calories, et puis par un radiateur pour permettre une dépose desdites calories et leur évacuation. La circulation de l'eau de refroidissement est effectuée grâce à une pompe à eau généralement entrainée par le moteur.

Pour réduire des rejets de polluants générés par la combustion, il est connu de ramener des gaz brulés à l'échappement c'est-à-dire en aval de la combustion dans les cylindres, vers les conduits d'admission. Lesdits gaz sont appelés des gaz recirculés. On a ainsi différents types de gaz brulés recirculés :
- des gaz recirculés haute pression prélevés depuis le circuit d'échappement en amont selon le sens d'écoulement des gaz de dispositifs de dépollution comme par exemple un catalyseur ou un piège à oxyde d'azote (Nox). De manière générale, les gaz brulés recirculés haute pression sont prélevés directement depuis un collecteur d'échappement fixé à une face d'échappement de la culasse, du côté latéral opposé à la face d'admission. Les gaz recirculés haute pression sont envoyés ensuite vers les conduits d'admission ou dans le répartiteur d'admission. De manière connue, selon différentes phases de fonctionnement du moteur, les gaz recirculés haute pression peuvent passer ou non par un module de pré-refroidissement disposé en amont de l'admission dans lesdits conduits d'admission selon le sens de circulation des gaz de l'admission. Pour ce faire, un volet de by-pass est agencé en amont dudit module de pré-refroidissement pour contourner ledit module de pré-refroidissement notamment lors des phases de fonctionnement avec un moteur froid. Ensuite, ledit volet de by-pass peut donc être porté à haute température et il convient de le refroidir pour garder son efficacité fonctionnelle.

L'invention décrite ci-après concerne le refroidissement de gaz recirculés haute pression en amont de l'admission dans le moteur dans un module de refroidissement pour accroitre le refroidissement desdits gaz recirculés.
- des gaz brulés recirculés basse pression prélevés dans le circuit d'échappement et de manière connue après un dispositif de dépollution. Lesdits gaz recirculés basse pression sont renvoyés de manière connue dans le circuit d'admission en amont du compresseur. Ils sont alors mélangés avec l'air frais capté en face avant du véhicule. Cependant après compression, le mélange air avec gaz recirculés d'admission s'est réchauffé ce qui est néfaste à l'efficacité du moteur.

Pour réduire la température du mélange avant son admission dans le moteur, un échangeur thermique tel qu'un WCAC acronyme pour « Water cooled Charge Air Cooler » en anglais ou module de refroidissement eau-air, est agencé dans le circuit d'admission d'air, entre l'élément de compression et le répartiteur d'admission du moteur, pour refroidir l'air compressé qui entre dans les chambres de combustion. Le refroidissement par ledit échangeur thermique WCAC représente le module de refroidissement principal pour l'air d'admission mais il peut ne pas être optimal.

L'invention décrite ci-après concerne aussi un étage de pré-refroidissement du mélange compressé d'air d'admission avec des gaz recirculés basse pression an amont de l'échangeur eau-gaz pour augmenter le refroidissement de l'air d'admission compressé. Ledit air d'admission peut être le mélange de gaz recirculés basse pression avec de l'air frais capté.

La publication EP1966476-B1 propose ainsi un module de refroidissement des gaz recirculés haute pression qui peut être un WCAC. La température des gaz recirculés peut être encore élevée avant leur entrée dans le circuit d'admission du moteur ce qui réduit l'efficacité dudit moteur.

De plus, un refroidissement supplémentaire d'une part des gaz recirculés en amont du WCAC et d'autre part de l'air compressé entraine une augmentation conséquente de l'encombrement du groupe motopropulseur comprenant le moteur et les divers accessoires nécessaires à son fonctionnement dans le compartiment moteur, ledit compartiment moteur devant être réduit pour des raisons d'esthétique du véhicule.

L'objet de l'invention présentée ici est un moteur thermique à combustion interne avec un circuit de refroidissement optimisé desdits gaz d'admission frais et recirculés avant leur entrée dans le circuit d'admission du moteur thermique.

### Présentation de l'invention

La présente invention concerne plus particulièrement un moteur thermique de véhicule automobile comprenant :
- un carter-cylindres,
- une culasse fixée au-dessus du carter-cylindres
- un circuit d'admission d'air comportant :
- un étage de refroidissement d'air frais agencé en aval d'un compresseur,
- un étage de refroidissement de gaz recirculés haute pression prélevés depuis un collecteur d'échappement fixé à la culasse,

Caractérisé en ce que le moteur comprend un carter de refroidissement dans lequel circule du liquide de refroidissement apte à loger lesdits deux étages.

De manière avantageuse, le moteur thermique ou à combustion interne comporte un carter de refroidissement dans lequel sont logés un étage de refroidissement d'air frais compressé issu d'une phase de compression par un compresseur et un étage de refroidissement de gaz recirculés prélevés depuis un collecteur d'échappement fixé à la culasse, les deux étages de refroidissement étant connectés à un même circuit d'admission d'air du moteur et suivant les mêmes règles de fonctionnement. Plus simplement, les deux étages de refroidissement doivent fonctionner en même temps et s'arrêter en même temps. Le carter de refroidissement permet donc de réduire de façon significative l'encombrement du groupe moto-propulseur comprenant le moteur et les éléments nécessaires à son fonctionnement dans une liste comprenant les refroidisseurs ou échangeurs de chaleur.

Selon d'autres caractéristiques de l'invention :
- l'étage de refroidissement des gaz recirculés comprend un volet de dérivation ou by-pass qui est logé dans le carter de refroidissement.

De manière connue, le moteur comprend un circuit de recirculation de gaz brulés haute pression prélevés depuis un collecteur d'échappement fixé à la culasse du moteur; lesdits étant à de haute températures au niveau de l'échappement et doivent donc être refroidis ici par l'étage de refroidissement des gaz recirculés. Toutefois, lors des démarrages à froid du moteur, il est nécessaire de faire monter rapidement en température ledit moteur. Un conduit de dérivation permet de contourner l'étage de refroidissement pour amener directement les gaz brulés aux conduits d'admission ou plus communément à l'admission du moteur. Le passage des gaz brulés au travers de l'étage de refroidissement ou par le conduit de dérivation est contrôlé par un volet dit de by-pass qui peut être monté à de hautes températures susceptibles d'affecter le bon fonctionnement dudit volet. De manière avantageuse, ledit volet de by-pass est également plongé dans le carter pour être refroidi afin d'améliorer son efficacité et sa fiabilité.
-le moteur comprend un conduit de dérivation du circuit de refroidissement des gaz recirculés agencée à l'extérieur du carter.

De manière avantageuse, le moteur comprend un conduit de dérivation agencé à l'extérieur du carter de refroidissement et connecté d'un côté au volet de by-pass et de l'autre côté aux conduits d'admission du moteur. Ledit conduit de dérivation est avantageusement isolé des étages de refroidissement des gaz et notamment du circuit de refroidissement du moteur.
- le carter comprend une face d'entrée des gaz et de l'air compressé tournée vers la face d'échappement du moteur et une face de sortie opposée tournée vers la face d'admission du moteur et une paroi latérale de fixation disposée entre les faces d'entrée et de sortie et fixée à une paroi de la culasse du moteur.

De manière avantageuse, le carter de refroidissement est fixé à une paroi de la culasse du moteur par une paroi latérale de fixation dont la forme est sensiblement complémentaire à la paroi de la culasse. Cela permet de faciliter l'assemblage dudit carter au moteur thermique. Avantageusement, le carter longe la paroi de fixation de la culasse et définit également un conduit d'amenée des gaz recirculés depuis la face échappement de la culasse vers la face admission, ledit conduit est aussi parfaitement maintenu vis-à-vis de la culasse du moteur.
- le carter comprend une première tubulure d'entrée d'air compressé connectée au compresseur par un conduit d'admission direct et une deuxième tubulure d'entrée de gaz recirculés haute pression connectée directement au collecteur d'échappement, toutes deux agencées à une extrémité du carter de refroidissement tournée vers la face échappement du moteur.

De manière avantageuse, le carter comprend une première extrémité tournée vers la face échappement de la culasse comportant des tubulures qui sont connectées de manière sensiblement directe à un collecteur d'échappement et au compresseur d'air frais grâce à des conduits qui sont de longueur réduite. La masse globale des conduits est ainsi optimisée.
- le carter de refroidissement comprend une première tubulure de sortie d'air compressé connectée en amont d'un échangeur de chaleur et une seconde tubulure de sortie de gaz recirculés distincte de la première tubulure et connectée avec un circuit d'admission d'air du moteur en aval de l'échangeur de chaleur.

De manière avantageuse, le carter de refroidissement comprend une seconde extrémité diamétralement opposée à la première extrémité tournée vers la face admission de la culasse comportant également deux tubulures qui sont connectées l'une à des conduits d'admission d'air en aval d'un échangeur de chaleur fixé à la culasse et recouvrant un plénum d'un répartiteur d'air, et l'autre à un conduit d'entrée en amont dudit échangeur de chaleur. Les longueurs des conduits de connexion entre le carter de refroidissement et les conduits d'admission d'air et l'échangeur de chaleur sont alors réduites et optimisées pour réduire l'encombrement de l'ensemble. De plus les gaz en sortie du carter de refroidissement sont à des températures réduites ce qui permet l'utilisation de matériaux souples et légers pour optimiser l'encombrement et le masse de l'ensemble.
- le carter de refroidissement comporte un embout d'entrée de liquide de refroidissement et un embout de sortie de liquide de refroidissement tous deux connectés avec un circuit de refroidissement du moteur.

De manière avantageuse, le carter de refroidissement comporte un embout d'entrée et un embout de sortie qui sont connectés à un circuit de refroidissement du moteur. De cette manière simple, le liquide de refroidissement du moteur entre dans le carter de refroidissement pour prendre un maximum de calories cédées par les gaz recirculés et l'air compressé pour les perdre ensuite au niveau classique d'un radiateur.
- les embouts d'entrée et de sortie de liquide de refroidissement du carter de refroidissement sont connectés au circuit de refroidissement du carter-cylindres du moteur.

De manière avantageuse, les embouts d'entrée et de sortie de liquide de refroidissement du carter de refroidissement sont connectés au circuit de refroidissement du carter-cylindres du moteur. De cette manière avantageuse, le contrôle du refroidissement du carter de refroidissement est analogue à celui du carter-cylindres notamment en cas de « split-cooling » ou double circuit de refroidissement dont un premier circuit concerne le refroidissement spécifique du carter-cylindres et un second circuit le refroidissement spécifique de la culasse.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
- la figure 1 est une vue schématique de dessus d'un moteur avec un circuit de refroidissement des gaz recirculés et de l'air compressé.
- la figure 2 est une vue schématique du carter de refroidissement regroupant un étage de refroidissement des gaz recirculés et un étage de refroidissement de l'air compressé.

### Description détaillée des figures

Dans la description qui va suivre, des chiffres de référence identiques désignent des pièces identiques ou ayant des fonctions similaires.

Les termes amont/aval se réfèrent au sens d'écoulement des gaz.

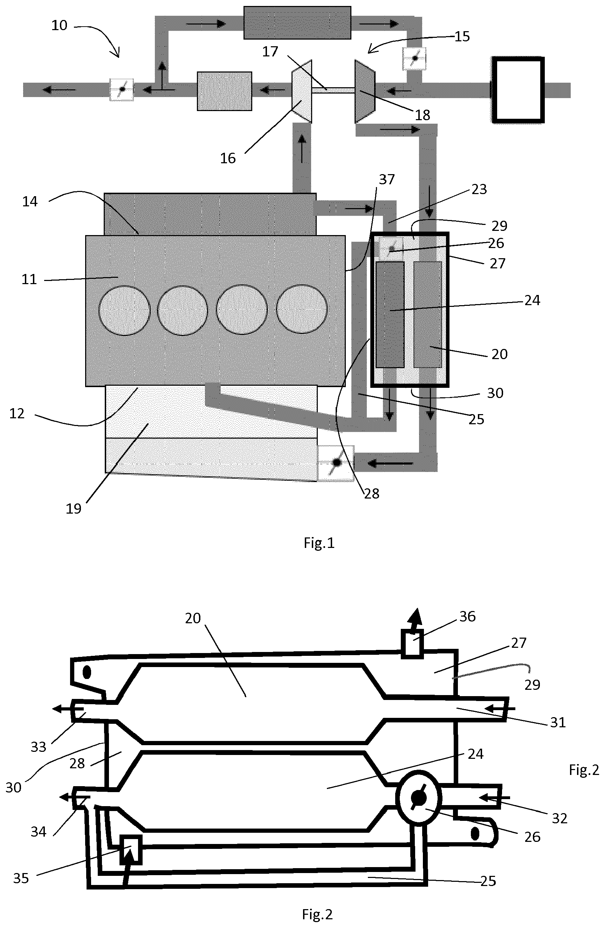

Selon la figure 1, un moteur thermique ou à combustion interne comprend un carter-cylindres (non représenté) et une culasse 11 fixé audit carter-cylindres et au-dessus de celui-ci. De l'air d'admission rentre dans le moteur 10 par la face d'admission 12 de la culasse 11. Après combustion des gaz brulés sont évacués par la face d'échappement 14 de la culasse diamétralement opposée à la face d'admission 12.

Ledit moteur thermique 10 ici turbocompressé comprend un turbocompresseur 15 avec une turbine 16 avec un axe de rotation 17 confondu avec l'axe de rotation d'un compresseur 18 d'air d'admission. Les gaz brulés passent par la turbine 16 et l'entrainent en rotation et donc également une roue de compression du compresseur 18.

D'autres types de compresseurs notamment un compresseur électrique peuvent être utilisés dans le cadre de l'invention pour comprimer l'air d'admission avant son entrée dans le moteur 10.

Après son passage par le compresseur 18, la température de l'air d'admission est sensiblement élevée. La température élevée de l'air d'admission a pour conséquence de réduire l'efficacité du moteur thermique. Il est donc connu de refroidir l'air d'admission avec un échangeur de chaleur 19 eau-air ou « WCAC » acronyme pour Water Charge Air Cooler. Ledit échangeur est fixé contre une face d'admission 12 de la culasse 11 et peut comme représenté en figure 1 comprendre un répartiteur d'admission d'air avec son plénum (non représenté) connecté avec des conduits d'admission d'air creusés dans ladite culasse 11 et menant à des chambres de combustion, chacune des chambres est délimitée par un cylindre, un piston mobile en coulissement dans le cylindre et une paroi inférieure de la culasse.

Pour répondre aux normes anti-pollution de plus en plus sévères, un étage de refroidissement 20 supplémentaire est rajouté dans le circuit d'admission d'air dit « frais » en amont de l'échangeur de chaleur eau-air 19. Ledit étage de refroidissement est appelé « precooler » ou pré-refroidissement.

Ledit air est dit frais car il capté depuis l'extérieur du véhicule en général au niveau de la face avant du véhicule.

Pour satisfaire aux normes de dépollution, des gaz brulés sont réinjectés à l'admission. Lesdits gaz brulés sont aussi appelés gaz recirculés ou EGR. L'acronyme « EGR » signifie Exhaust Gas Recirculation pour recirculation de gaz brulés. Il existe deux types de gaz recirculés :
- des gaz recirculés basse pression prélevés au niveau ou en aval d'un dispositif de dépollution 21 tel qu'un catalyseur. Lesdits gaz recirculés basse pression sont ensuite mélangés avec l'air frais. Le mélange d'air frais avec des gaz recirculés basse pression passe ensuite par le compresseur 18 et la température dudit mélange augmente en conséquence.
- des gaz recirculés haute pression prélevés directement depuis un collecteur d'échappement 22. Les gaz recirculés haute pression sont à de très hautes températures et nécessitent d'être refroidis avant d'être réadmis dans des conduits d'admission d'air.

Les gaz recirculés haute pression passent un circuit de recirculation de gaz recirculés haute pression 23 qui comporte un étage de refroidissement supplémentaire 24, avant leur introduction dans les conduits d'admission d'air du moteur 10 en aval de l'échangeur de chaleur eau-air WCAC 19.

Toutefois, lors des phases de démarrage à froid, il est requis d'avoir une montée en température rapide du moteur. Aussi il est connu de ne pas refroidir le carter-cylindres lors des démarrages à froid pour permettre une montée en température plus rapide dudit carter-cylindres, la culasse 11 comportant des conduits d'échappement des gaz brulés atteint rapidement un niveau de température élevé.

Il est aussi connu de ne pas refroidir les gaz recirculés haute pression lors des mêmes démarrages à froid. Le circuit de recirculation 23 des gaz recirculés haute pression comprend donc un conduit de dérivation 25 pour contourner l'étage de refroidissement 24. Un volet de dérivation 26 est disposé en amont du conduit de dérivation 25 pour permettre le passage des gaz recirculés haute pression soit par le conduit de dérivation 25 soit par l'étage de refroidissement 24. Ledit volet de dérivation 26 étant en contact avec les gaz recirculés est également porté à haute température ce qui peut nuire à son fonctionnement.

L'invention concerne le moteur thermique 10 comportant un étage de refroidissement supplémentaire des gaz recirculés haute pression 24 et un étage de refroidissement 20 de l'air frais mélangé et compressé avec un encombrement réduit.

Selon la figure 1, le moteur 10 comprend un carter-cylindres (non représenté), une culasse 11 fixée audit carter-cylindres et au-dessus de ce dernier et un circuit d'admission d'air 50 qui comporte :
- l'étage de refroidissement d'air frais 20 agencé en aval du compresseur 18,
- l'étage de refroidissement 24 de gaz recirculés haute pression prélevés depuis le collecteur d'échappement 22.

Lesdits étages de refroidissement 20,24 sont regroupés et logés à l'intérieur d'un carter de refroidissement 27. Lesdits étages de refroidissement sont formés par exemple par des serpentins (non représentés) dans lesquels circulent les gaz recirculés et l'air frais et qui sont plongés dans un volume de liquide de refroidissement. Ledit volume de liquide est contenu dans le carter de refroidissement 27. Ledit carter 27 est sensiblement de forme parallépipédique avec une paroi latérale de fixation 28 comprise entre une face d'extrémité 29 d'entrée des gaz tournée vers la face échappement 14 de la culasse 11 et une face d'extrémité de sortie 30 tournée vers la face d'admission 12 de ladite culasse. La paroi latérale de fixation du carter 27 est sensiblement complémentaire à une paroi transversale de fixation 37 de la culasse.

Selon un mode de réalisation de l'invention, le carter de refroidissement est fixé contre la paroi transversale de la culasse.

Selon la figure 2, le carter de refroidissement 27 comprend donc une première tubulure d'entrée 31 pour l'air frais compressé et une deuxième tubulure d'entrée 32 pour les gaz recirculés haute pression. Les tubulures d'entrée sont avantageusement disposées à l'extrémité du carter 27 tournée vers la face d'extrémité d'entrée 29 de l'air et des gaz brulés. Les tubulures peuvent selon un mode de réalisation déboucher de la face d'extrémité d'entrée des gaz 29. De ce fait, la liaison dudit carter 27 avec le compresseur qui est également disposé du côté de la face échappement de la culasse 11 est de longueur réduite. Il en est de même pour la liaison dudit carter 27 avec un piquage dans le collecteur 22 d'échappement pour prélever les gaz brulés. Les réductions de longueurs des liaisons permettent d'une part de réduire l'encombrement du moteur avec le circuit de refroidissement d'air 50 et d'autre d'en réduire la masse globale.

Le carter de refroidissement comprend aussi une première tubulure de sortie d'air frais compressé 33 et une deuxième tubulure de sortie des gaz brulés 34 disposées à l'extrémité opposée du carter 27 tournée vers la face d'extrémité de sortie 30 du carter 27. Selon un mode de réalisation de l'invention, les tubulures de sortie débouchent de la face d'extrémité de sortie 30 du carter 27. La liaison entre la tubulure de sortie 33 d'air frais et l'échangeur de chaleur WCAC 19 est de longueur réduite. Il en est de même pour la liaison entre la tubulure de sortie 34 des gaz brulés et le répartiteur d'admission d'air. Les réductions de longueurs des liaisons permettent d'une part de réduire l'encombrement du moteur avec le circuit de refroidissement d'air 50 et d'autre part d'en réduire la masse globale.

Selon un mode de réalisation préféré, le carter de refroidissement 27 est apte à loger le volet de dérivation 26 pour assurer le refroidissement et éviter de fortes températures dudit volet. Le conduit de dérivation 25 connecté audit volet 26 débouche du carter de refroidissement vers l'extérieur pour rejoindre la tubulure de sortie 34 des gaz brulés en amont du répartiteur d'admission.

Selon la figure 2, le carter de refroidissement 27 comprend un seul premier embout d'entrée 35 de liquide de refroidissement et un seul deuxième embout de sortie 36 dudit liquide, les deux embouts sont connectés à un unique circuit de refroidissement du moteur (non représenté). Selon un mode de réalisation, deux perçages sont effectués dans une paroi du moteur pour atteindre des conduits du circuit de refroidissement du moteur. Dans lesdits perçages sont enfoncés des conduites connectées avec les embouts d'entrée et de sortie 35,36 du carter de refroidissement 27. On peut voir que le carter de refroidissement est connecté à un unique circuit de refroidissement pour d'une part réduire l'encombrement et d'autre part faciliter la mise en place.

De manière préférentielle, les perçages sont effectués dans une paroi du carter-cylindres pour atteindre des conduits du circuit de refroidissement du carter-cylindres. Les embouts d'entrée et de sortie 35,36 de liquide de refroidissement du carter de refroidissement 27 sont connectés au circuit de refroidissement du carter-cylindres du moteur. Le contrôle du refroidissement par les deux étages de refroidissement 20,24 est analogue avec le refroidissement du carter-cylindres. Notamment pour des moteurs avec un double refroidissement séparé de la culasse et du carter-cylindres ou « split cooling », lors des phases de démarrages du moteur froid, on peut facilement éviter les deux étages de refroidissement 20,24 en contrôlant uniquement le refroidissement du carter-cylindres. Le liquide de refroidissement ne circulant pas dans le carter-cylindres pour permettre une montée en température plus rapide dudit carter-cylindres, ne circule pas non plus dans le carter de refroidissement 27, ce qui permet de garder une température suffisamment haute des gaz recirculés et de l'air frais d'admission avant leur admission dans le moteur 10.

L'objectif est atteint: le moteur thermique 10 comprend un circuit d'admission d'air composé d'un étage de refroidissement supplémentaire des gaz recirculés haute pression 24 et un étage de refroidissement 20 de l'air frais mélangé et compressé avec un encombrement réduit et une réduction de la masse globale de l'ensemble. Ledit circuit d'admission d'air peut aussi facilement contourner/arrêter les deux étapes de refroidissement de gaz recirculés haute pression et d'air frais compressé.

L'invention concerne le moteur thermique 10 comportant un étage de refroidissement supplémentaire des gaz recirculés haute pression 24 et un étage de refroidissement 20 de l'air frais mélangé et compressé avec un encombrement réduit.

## Revendications

1. Moteur thermique (10) de véhicule automobile comprenant
- un carter-cylindres,
- une culasse (11) fixée au dessus du carter-cylindres
- un circuit d'admission d'air (50) comportant :
- un étage de refroidissement d'air frais (20) agencé en aval d'un compresseur (18),
- un étage de refroidissement (24) de gaz recirculés haute pression prélevés depuis un collecteur d'échappement (37),
**Caractérisé en ce que** le moteur (10) comprend un carter de refroidissement (27) connecté à un unique circuit de refroidissement du moteur et dans lequel circule du liquide de refroidissement, apte à loger lesdits deux étages de refroidissement (20,24).

2. Moteur thermique (10) selon la revendication 1, **caractérisé en ce que** l'étage de refroidissement des gaz recirculés (24) comprend un volet de dérivation (26) qui est logé dans le carter de refroidissement (27).

3. Moteur thermique (10) selon la revendication 1 ou 2, **caractérisé en ce que** le moteur (10) comprend un conduit de dérivation (25) du circuit de refroidissement des gaz recirculés (23) agencée à l'extérieur du carter de refroidissement (27).

4. Moteur thermique (10) selon l'une quelconque des revendications 1 à 3, **caractérisé en ce que** le carter (27) comprend une face d'entrée (29) des gaz et de l'air compressé tournée vers la face d'échappement (14) du moteur et une face de sortie (30) diamétralement opposée tournée vers la face d'admission (12) du moteur et une paroi latérale de fixation (28) disposée entre les faces d'entrée et de sortie et fixée à une paroi de la culasse du moteur.

5. Moteur thermique (10) selon l'une quelconque des revendications 1 à 4, **caractérisé en ce que** le carter (27) comprend une première tubulure d'entrée (31) d'air compressé connectée au compresseur (18) par un conduit direct d'admission et une deuxième tubulure d'entrée de gaz recirculés (32) haute pression connectée directement au collecteur d'échappement (37), les deux tubulures sont agencées à une extrémité du carter de refroidissement (27) tournée vers la face échappement (14) de la culasse.

6. Moteur thermique (10) selon l'une quelconque des revendications 1 à 5, **caractérisé en ce que** le carter de refroidissement (27) comprend une première tubulure de sortie (33) d'air compressé connectée en amont d'un échangeur de chaleur (19) et une seconde tubulure de sortie (34) de gaz recirculés distincte de la première tubulure (33) et connectée avec un circuit d'admission d'air du moteur en aval de l'échangeur de chaleur (19).

7. Moteur thermique (10) selon l'une quelconque des revendications 1 à 6, **caractérisé en ce que** le carter de refroidissement (27) comporte un embout d'entrée (35) de liquide de refroidissement et un embout de sortie (36) de liquide de refroidissement, tous deux connectés avec un circuit de refroidissement du moteur.

8. Moteur thermique (10) selon la revendication 7, **caractérisé en ce que** les embouts d'entrée et de sortie (35,36) de liquide de refroidissement du carter de refroidissement (27) sont connectés au circuit de refroidissement du carter-cylindres du moteur.
